# EUROPEAN PATENT SPECIFICATION

(11) **EP 1 053 602 B1**
(45) Date of publication and mention of the grant of the patent: **16.01.2002**
(21) Application number: 99903942.3
(22) Date of filing: 01.02.1999
(51) Int. Cl.: H04B 7/08

(54) **RADIO RECEIVING APPARATUS WITH SWITCHED DIVERSITY**
FUNKEMPFANGSGERÄT MIT GESCHALTETER DIVERSITÄT
APPAREIL DE RECEPTION RADIO A DIVERSITE PAR COMMUTATION

(30) Priority: 04.02.1998 NL 1008198
(43) Date of publication of application: 22.11.2000
(73) Proprietor: TELEFONAKTIEBOLAGET LM ERICSSON, 126 25 Stockholm (SE)
(72) Inventor: BROUWER, Frank, Bastiaan, NL-7543 GA Enschede (NL)
(74) Representative: van der Arend, Adrianus G.A., Ir.
(86) International application number: NL9900053
(87) International publication number: WO9940690

(56) References cited:
- EP-A- 0 440 239
- WO-A-96/02984

## Description

The invention relates to a radio receiving apparatus according to the preamble of claim 1.

An apparatus of this type is known in practice for a DECT (Digital Enhanced Cordless Telecommunications) telephony system which operates with transmission via radio - waves. The system can be suitable for using a plurality of separate radio channels having different carrier wave frequencies. Each radio channel is divided over time into a continuously repeated series of time slots which can be allocated to couples of a transmitting apparatus and a receiving apparatus. Both a transmitting apparatus and a receiving apparatus can form part of a stationary base station or of a portable station. In the case of DECT, half the time slots of a series are allocated to a transmitting apparatus of a base station, and the other time slots are allocated to the transmitting apparatuses of the portable stations. Such a mode of communication is known as TDMA/TDD ("Time Division Multiple Access/Time Division Duplex").

Since it is possible in a radio communications system, in particular a system comprising portable and/or mobile stations, for considerable fluctuations ("fading") to occur in an antenna signal received by a receiving apparatus, the known receiving apparatus has various antennas. During the preamble of a transmission in a time slot allocated to the apparatus, a quality characteristic is determined successively of each of the antenna signals from the respective antennas, and the antenna having the best antenna signal is selected for receiving the remainder of the transmission. The quality of the transmission can be represented by the strength of the received antenna signal, RSSI ("Received Signal Strength Indication").

The various stations of a communications system each have their own time base, an output signal of which can shift with respect to the output signal of one or more other stations. It is consequently possible for a preamble of a transmission in a particular time slot by a particular transmitting apparatus to be gradually overlapped by a final portion (postamble) of a transmission by another transmitting apparatus in a prior time slot. Owing to this gradual coincidence ("sliding collision"), the field strength during a first measuring window of the partly overlapped preamble increases with respect to the field strength in a subsequent measuring window of said preamble. The known receiving apparatus will then, for receiving the remainder of the transmission containing the overlapped preamble, give preference to the antenna whose antenna signal is measured during the first measuring window. Nevertheless it is possible, once past the overlap, for one of the other antenna signals to be better, all the same, than the preferred antenna signal which may perhaps have been selected only as a result of the overlap. Consequently, the quality of the communication may deteriorate, despite the presence of a suitable, but unused antenna signal during the transmission of message data thereof. Such a deterioration in quality may last for a considerable time.

It is an object of the invention to overcome the drawbacks of the known apparatus.

To achieve this object, the invention provides a radio receiving apparatus according to claim 1.

Since, in the event of sliding collision of successive transmissions of different transmitting apparatuses, the transmissions in a later measuring window of the preamble will coincide at a later time, and the antenna signal of an antenna can be measured with the same rank in different measuring windows of successive time slots, it is possible to establish whether a deviant pattern of successive preferred antenna signals, for example alternately coming from the various antennas, is occurring and it is possible to establish collision as a function thereof. The system can be suitable for then allocating a time slot having a different rank and/or another channel with another carrier wave frequency to one of the transmitting apparatuses and the corresponding receiving apparatus.

Further characteristics and advantages of the invention will become evident from the following explanation in conjunction with the appended drawings, in which:
Figure 1 shows a schematic of a radio receiving apparatus suitable for use of the invention; and
Figure 2 shows a diagram of transmissions in two successive time slots by two different transmitting apparatuses.

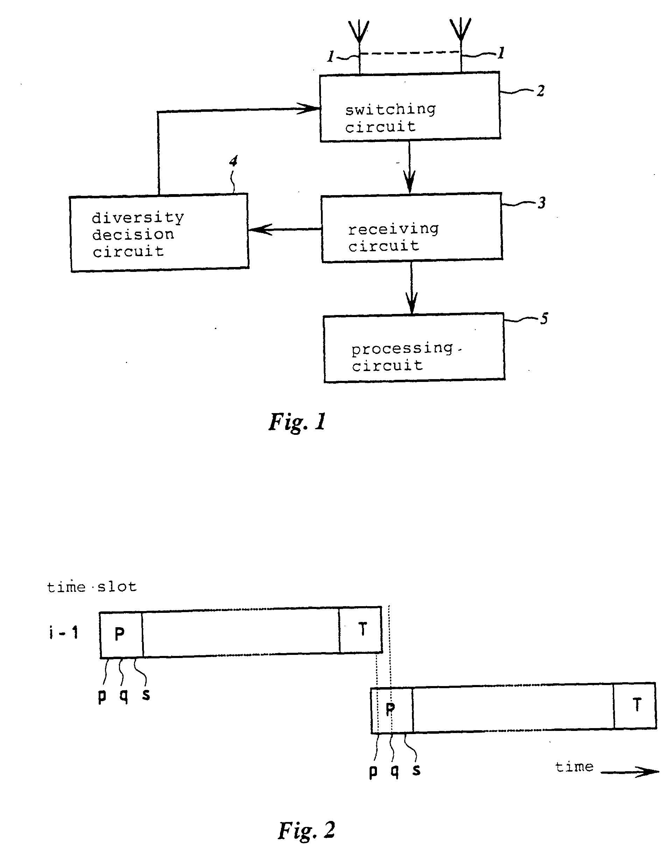

Figure 1 shows a schematic of a receiving apparatus of a stationary station or of a portable (or mobile) station of a radio communications system. A station with such a receiving apparatus may further include a transmitting apparatus (not shown). Communication between different stations takes place by means of Time Division Multiplexing or TDM, in which a radio telephony signal is divided into a repeated series of successive time slots which are each suitable for successively transporting a preamble and message data by means of a carrier wave. Allocated to a receiving apparatus of the one station and a transmitting apparatus of another station is a time slot having a specific rank. A time slot having a different rank may be allocated for transmission in the opposite direction between these stations. An example where this is used is DECT ("Digital Enhanced Cordless Telecommunications"), in which a plurality of separate radio channels are used which are each, by means of TDMA/TDD ("Time Division Multiple Access/Time Division Duplex"), divided into a series of time slots of twelve time slots for transmission from a base station to portable stations, followed by twelve time slots for transmission from the portable stations to the base station. A transmission by a transmitting apparatus is divided into a number of control and check fields, followed by a data field which contains the binary information of the actual message, followed by check and compensation fields. A portion of the heading control and check fields is referred to as preamble, which can consist of sixteen bits, in the case of DECT, or sixteen additional preceding bits if an extended preamble is used. A final portion of a transmission is referred to as postamble in the present description.

The receiving apparatus shown in Figure 1 operates with switched antenna diversity. To this end, the apparatus comprises a number of antennas 1, which are connected to inputs of a switching circuit 2, one output of which is connected to a receiving circuit 3. Connected between an output of the receiving circuit 3 and a control input of the switching circuit 2 is a diversity decision circuit 4. A processing circuit 5 receives, from the receiving circuit 3, message data which are present in a transmission and which may represent speech or other information.

Figure 2 schematically shows two transmissions, one of which transmissions is performed by a transmitting apparatus in a time slot i and another of which transmissions is performed by another station in a preceding time slot i-1. Each transmission comprises a preamble P at the beginning, a postamble T at the end and in between a field with the actual message data.

During successive measuring windows within each preamble P, which, in the case of two antennas 1 being used, are indicated by times p and q in Figure 2, the diversity decision circuit 4 drives the switching circuit 2 in terms of selecting and passing on, to the receiving circuit 3, a different antenna signal each time, whereupon the diversity decision circuit 4 measures a quality characteristic of the selected antenna signal and the diversity decision circuit 4, having measured the quality characteristics of all the selected antenna signals, selects a preferred antenna signal on the basis thereof. The preferred antenna signal is passed on to the receiving circuit 3 from a time s for the remainder of the transmission. The quality characteristic is, for example, the strength of the antenna signal RSSI ("Received Signal Strength Indicator").
- Since time bases of the different transmitting apparatuses operate independently of one another, it is possible for transmissions by one or more transmitting apparatuses to shift over time. This may cause overlapping of the preamble P of a particular transmission by a transmitting apparatus in a time slot i by a postamble T of another transmission by another transmitting apparatus in a preceding time slot i-1. This is referred to as sliding collision, of which Figure 2 shows an example.

In the case of Figure 2, the field strength at the antennas 1 at time p where overlap occurs will be greater than at time q. If at time p the antenna signal of the same antenna 1 is selected each time and were to be passed on to the receiving circuit 3, it is possible for the antenna signal passed on from time s to have been selected incorrectly as the preferred antenna signal. This may considerably impair the communication for quite a while.

According to the invention, the diversity decision circuit 4 is suitable for driving the switching circuit 2 in such a way that during a measuring window having a specific rank of a time slot allocated to the receiving apparatus of successive series of time slots an antenna signal is selected which is different from an antenna signal selected previously during the measuring window having the specific rank. This allows the diversity decision circuit 4 to measure the quality of antenna signals coming from different antennas 1 during different measuring windows having the specific rank. If during transmission in particular in successive ones of these measuring windows different antenna signals are selected as preferred antenna signals, this suggests that very likely collision has occurred. The diversity decision circuit 4 monitors the time-dependent pattern of preferred antenna signals and on the basis thereof establishes whether collision has occurred. If no other significant interference occurs, the pattern of preferred antenna signals will essentially consist of an alternation of the various antenna signals. Since the pattern, in the event of a collision, will in fact not consist of an alternation of the antenna signals, the diversity decision circuit 4 can perform a filter function (for example moving average) thereon in order to decide, until collision occurs, when the pattern essentially consists of an alternation of the various antenna signals.

In general, in the event of collision, the first measuring window will be overlapped first. The general procedure will therefore be to use the first measuring window as the abovementioned measuring window having the specific rank. If for more than two antennas 1 more than two measuring windows are used, an intermediate measuring window can be used as the measuring window having the specific rank.

The design of the diversity decision circuit 4 can be such that during the said measuring window having the specific rank of an allocated time slot of successive series of time slots different antenna signals are selected in a fixed sequence. This is shown in Table I which specifies, for six time slots iₙ of successive series of time slots, which antenna signal A or B is passed on at the times p and q of two respective measuring windows and which antenna signal is passed on in the time slot from the selection time s for the remainder of the transmission.

**TABLE I**

| Case | Antenna sequence at times p, q and s for a time slot iₙ of n successive time slot series | | | | | |
|---|---|---|---|---|---|---|
| | i₁ | i₂ | i₃ | i₄ | i₅ | i₆ |
| | p q s | p q s | p q s | p q s | p q s | p q s |
| Ia | A B A | B A A | A B A | B A A | A B A | B A A |
| Ib | A B A | B A A | A B A | B A B | A B A | B A A |
| Ic | A B A | B A B | A B A | B A B | A B A | B A B |

In each of the cases Ia, Ib and Ic of Table I, a different antenna signal A, B is alternately passed on during the measuring window having the specific rank, in particular the first measuring window.

In case Ia, antenna signal A is found to be selected every time as the preferred antenna signal at time s. This indicates an optimal, probably interference-free reception by means of antenna signal A.

In case Ib, mostly antenna signal A and sometimes antenna signal B is found to be selected as the preferred antenna signal. This generally indicates the occurrence of fluctuations over time ("fading") of an antenna signal.

In case Ic of Table I, the preferred antenna signal is alternately one of the signals A and B. This generally indicates collision between transmissions coming from different transmission apparatuses. When this is observed it is possible, in order to eliminate this collision, to decide to allocate to the transmission apparatus-receiving apparatus couple in question a time slot having a different rank and/or a channel having a different carrier frequency.

It should be noted that for time p (complementary to time q) it is possible, if required, to use a fixed alternation sequence other than the sequence A, B, A, B,... of Table I, for example A, A, B, B, A,...

According to another embodiment of the diversity decision circuit 4 and as presented in Table II, rather than antenna signals being selected in accordance with a fixed sequence (as in Table I) in the measuring window having the specific rank, in particular the first measuring window, the procedure is to select, in that measuring window, an antenna signal which is different from the antenna signal selected as the last preferred antenna signal. If two antennas 1 and two measuring windows p and q are used, the antenna signal that was selected as the last preferred antenna signal will then be selected and measured in the second measuring window q.

**TABLE II**

| Case | Antenna sequence at times p, q and s for a time slot iₙ of n successive time slot series | | | | | |
|---|---|---|---|---|---|---|
| | i₁ | i₂ | i₃ | i₄ | i₅ | i₆ |
| | p q s | p q s | p q s | p q s | p q s | p q s |
| IIa | A B A | B A A | B A A | B A A | B A A | B A A |
| IIb | A B A | B A A | B A A | B A B | A B A | B A A |
| IIc | A B A | B A B | A B A | B A B | A B A | B A B |

The cases IIA, IIb and IIc apply to the same situations as for the respective cases Ia, Ib and Ic.

It should be noted that the invention is not limited to use with DECT, but is more generally applicable to TDM. Moreover, the invention is not limited to transmission of speech information or to radio signals having a specific band width.

It should also be noted that the circuits 2, 3, 4, 5 shown separately in Figure 1 can in reality be interwoven and/or integrated, and different functions, in particular of the switching circuit 2 and of the diversity decision circuit 4 can be carried out by means of software.

## Claims

1. Radio receiving apparatus with switched diversity for receiving a time division multiplex radio signal which is divided into a repeated series of successive time slots (..., i-1, i, i+1, ...) which are each suitable for successively transporting a preamble (P) and message data by means of a carrier wave, the apparatus comprising:
- a number of antennas (1);
- a switching circuit (2) which from the antennas (1) receives, respectively, antenna signals (A, B) and which passes on a selected antenna signal of the received antenna signals;
- a receiving circuit (3) which, during an allocated time slot (i) of the series, derives the preamble from the selected antenna signal; and
- a diversity decision circuit (4) which, during the derived preamble selects different antenna signals during successive measuring windows and therefrom determines a preferred antenna signal having a better quality value than one or more other antenna signals and which then drives the switching circuit (2) for the purpose of selecting the preferred antenna signal, **characterized in that**
- the diversity decision circuit (4) is suitable for driving the switching circuit (2) in such a way that during a measuring window having a specific rank of the allocated time slot (i) of successive series an antenna signal is selected which is different from an antenna signal selected previously during the measuring window having the specific rank;
- the diversity decision circuit (4) monitors a pattern of successive preferred antenna signals and compares it with one or more previously determined patterns; and
- the diversity decision circuit (4) establishes, depending on the result of the comparison, whether collision has occurred between one or more successive preferred antenna signals.

2. Radio receiving apparatus according to claim 1, **characterized in that** the measuring window having the specific rank is the measuring window which occurs first during the preamble.

3. Radio receiving apparatus according to claim 1 or 2, **characterized in that** the diversity decision circuit (4) establishes that collision has occurred if successive preferred antenna signals are essentially alternating antenna signals.

4. Radio receiving apparatus according to any one of the preceding claims, **characterized in that** the diversity decision circuit (4) drives the switching circuit (2) in such a way that during successive measuring windows having the specific rank different antenna signals are selected according to a fixed sequence.

5. Radio receiving apparatus according to any one of claims 1 to 3 inclusive, **characterized in that** the diversity decision circuit (4) drives the switching circuit (2) in such a way that during the measuring window having the specific rank an antenna signal is selected which is different from the previously determined preferred antenna signal.

## Patentansprüche

1. Funkempfangsgerät mit geschalteter Diversität für den Empfang eines Zeitteilungmultiplex-Funksignals, das in eine wiederholte Reihe von aufeinanderfolgenden Zeitschlitzen (..., i-1, i, i+1, ...) unterteilt ist, deren jeder dafür geeignet ist, aufeinanderfolgend eine Präambel (P) und Nachrichtendaten durch eine Trägerwelle zu befördern, das Gerät umfassend:
- eine Anzahl von Antennen (1);
- einen Verteiler-Kreis (2), der von den Antennen (1) entsprechende Antennensignale (A, B) empfängt und ein aus den empfangenen Antennensignalen ausgewähltes Antennensignal weitergibt;
- einen empfangenden Kreis (3), der die Präambel während eines zugewiesenen Zeitschlitzes (i) der Reihe aus dem ausgewählten Antennensignal ableitet; und
- einen Diversitäts-Entscheidungskreis (4), der während der abgeleiteten Präambel innerhalb aufeinanderfolgender Messfenster verschiedene Antennensignale auswählt und daraus ein bevorzugtes Antennensignal bestimmt, das einen höheren Qualitätswert als ein oder mehrere andere Antennensignale hat, und dann den Verteiler-Kreis (2) zu dem Zweck steuert, das bevorzugte Antennensignal auszuwählen,
**dadurch gekennzeichnet, dass**
- der Diversitäts-Entscheidungskreis (4) geeignet ist, den Verteiler-Kreis (2) derart zu steuern, dass während eines Messfensters, das einen bestimmten Rang des zugewiesenen Zeitschlitzes (i) von aufeinanderfolgenden Reihen hat, ein Antennensignal ausgewählt wird, das sich von einem Antennensignal unterscheidet, das vorher während des Messfensters mit dem bestimmten Rang ausgewählt worden war;
- der Diversitäts-Entscheidungskreis (4) ein Muster von aufeinanderfolgenden, bevorzugten Antennensignalen überwacht und es mit einem oder mehreren, früher festgestellten Mustern vergleicht; und
- der Diversitäts-Entscheidungskreis (4) in Abhängigkeit vom Vergleichsergebnis feststellt, ob Kollision zwischen einem oder mehreren aufeinanderfolgenden, bevorzugten Antennensignalen stattgefunden hat.

2. Funkempfangsgerät gemäss Anspruch 1, **dadurch gekennzeichnet, dass** das den bestimmten Rang aufweisende Messfenster das Messfenster ist, das während der Präambel zuerst erscheint.

3. Funkempfangsgerät gemäss Anspruch 1 oder 2, **dadurch gekennzeichnet, dass** der Diversitäts-Entscheidungskreis (4) feststellt, dass Kollision stattgefunden hat, sofern aufeinanderfolgende, bevorzugte Antennensignale im wesentlichen alternierende Antennensignale sind.

4. Funkempfangsgerät nach einem der vorangehenden Ansprüche, **dadurch gekennzeichnet, dass** der Diversitäts-Entscheidungskreis (4) den Verteiler-Kreis (2) derart steuert, dass während aufeinanderfolgender Messfenster, die den bestimmten Rang haben, gemäss einer festgelegten Reihenfolge unterschiedliche Antennensignale ausgewählt werden.

5. Funkempfangsgerät nach einem der Ansprüche 1 bis 3, **dadurch gekennzeichnet, dass** der Diversitäts-Entscheidungskreis (4) den Verteiler-Kreis (2) derart steuert, dass während des Messfensters, das den bestimmten Rang hat, ein Antennensignal ausgewählt wird, das sich von dem vorher bestimmten, bevorzugten Antennensignal unterscheidet.

## Revendications

1. Appareil de réception radio à commutation de diversité pour recevoir un signal radio multiplexé par répartition dans le temps qui est divisé en une série répétée de tranches de temps successives (..., i - 1, i, i + 1, ...) qui sont chacune appropriées pour transporter de manière successive un préambule (P) et des données de message au moyen d'une onde porteuse, l'appareil comprenant :
- un certain nombre d'antennes (1) ;
- un circuit de commutation (2) qui reçoit respectivement à partir des antennes (1) des signaux d'antenne (A, B) et qui laisse passer un signal d'antenne sélectionné parmi les signaux d'antenne reçus ;
- un circuit de réception (3) qui, pendant une tranche de temps attribuée (i) de la série, obtient le préambule à partir du signal d'antenne sélectionné ; et
- un circuit de décision de diversité (4) qui, pendant le préambule obtenu, sélectionne des signaux d'antenne différents pendant des fenêtres de mesure successives et détermine à partir de ces derniers un signal d'antenne préféré ayant une meilleure qualité qu'un ou plusieurs autres signaux d'antenne et qui pilote ensuite le circuit de commutation (2) dans le but de sélectionner le signal d'antenne préféré,
**caractérisé en ce que** :
- le circuit de décision de diversité (4) est approprié pour piloter le circuit de commutation (2) de sorte que pendant une fenêtre de mesure ayant un rang spécifique de la tranche de temps attribuée (i) de série successive, un signal d'antenne est sélectionné qui diffère d'un signal d'antenne précédemment sélectionné pendant la fenêtre de mesure ayant le rang spécifique ;
- le circuit de décision de diversité (4) contrôle une combinaison de signaux d'antenne préférés successifs et la compare à une ou plusieurs combinaisons précédemment déterminées ; et
- le circuit de décision de diversité (4) établit, selon le résultat de la comparaison, si une collision s'est produite entre un ou plusieurs signaux d'antenne préférés successifs.

2. Appareil de réception radio selon la revendication 1, **caractérisé en ce que** la fenêtre de mesure ayant le rang spécifique est la fenêtre de mesure qui se produit en premier pendant le préambule.

3. Appareil de réception radio selon la revendication 1 ou 2, **caractérisé en ce que** le circuit de décision de diversité (4) établit qu'une collision s'est produite si des signaux d'antenne préférés successifs sont essentiellement des signaux d'antenne alternatifs.

4. Appareil de réception radio selon l'une quelconque des revendications précédentes, **caractérisé en ce que** le circuit de décision de diversité (4) pilote le circuit de commutation (2) de sorte que pendant des fenêtres de mesure successives ayant le rang spécifique, des signaux d'antenne différents sont sélectionnés selon une séquence fixée.

5. Appareil de réception radio selon l'une quelconque des revendications précédentes 1 à 3 incluses, **caractérisé en ce que** le circuit de décision de diversité (4) pilote le circuit de commutation (2) de sorte que pendant la fenêtre de mesure ayant le rang spécifique, un signal d'antenne est sélectionné qui diffère du signal d'antenne préféré précédemment déterminé.
